# DEMANDE DE BREVET EUROPEEN

(11) **EP 4 700 076 A1**
(43) Date de publication de la demande: **25.02.2026**
(21) Numéro de dépôt: 25193335.4
(22) Date de dépôt: 01.08.2025
(51) Int. Cl.: C08J 9/00, C08J 9/28

(54) **MATÉRIAU UTILE POUR LA DÉTECTION DE COMPOSÉS CHIMIQUES**

(30) Priorité: 07.08.2024 FR 2408766
(71) Demandeur: Commissariat à l'Energie Atomique et aux Energies Alternatives, 75015 Paris (FR)
(72) Inventeur: DE SOUSA NOBRE, Sonia, 38054 GRENOBLE cedex 0 (FR); LAURENT, Manon, 38054 GRENOBLE cedex 09 (FR); PENLOU, Sébastien, 38054 GRENOBLE cedex 09 (FR); LEPEYTRE, Célia, 30650 ROCHEFORT DU GARD (FR); TERMEAU, Lucile, 38054 GRENOBLE cedex 09 (FR)
(74) Mandataire: Santarelli

(57) **Abrégé**

L'invention se rapporte à un matériau comprenant une couche C1 qui résulte de la congélation puis sublimation d'une mousse formée par une dispersion de bulles gazeuses dans une solution aqueuse moussante A1, la solution aqueuse moussante A1 comprenant au moins un indicateur de détection, au moins un agent tensioactif et, éventuellement, au moins un agent gélifiant, et comprenant de plus une couche C2 qui résulte de la congélation puis sublimation d'une mousse formée par une dispersion de bulles gazeuses dans une solution aqueuse moussante A2, la solution aqueuse moussante A2 comprenant au moins un indicateur de détection, au moins un agent tensioactif et, éventuellement, au moins un agent gélifiant, dans lequel:

- les couches C1 et C2 forment ensemble un empilement; et

- la solution aqueuse moussante A1 et la solution aqueuse moussante A2 comprennent au moins un indicateur de détection différent.

L'invention se rapporte également à un procédé de préparation du matériau tel que précédemment décrit.

Elle se rapporte aussi à l'utilisation dudit matériau pour la détection de la présence d'au moins un composé chimique.

Applications : détection colorimétrique et/ou de fluorescence de composés chimiques, de composés toxiques de guerre ou de composés toxiques industriels chimiques.

## Description

### Domaine technique

L'invention se rapporte au domaine de la détection de composés chimiques.

Plus spécifiquement, l'invention se rapporte à matériau pour détecter au moins un composé chimique.

Elle se rapporte aussi à un procédé de préparation de ce matériau.

L'invention se rapporte également à l'utilisation de ce matériau pour détecter la présence d'au moins un composé chimique susceptible d'être présent dans un milieu.

La présente invention peut trouver application pour la détection de composés toxiques, tels que des composés toxiques de guerre ou des composés toxiques industriels chimiques (connus sous l'abréviation TICs).

### État de la technique antérieure

Il est connu que certains composés organophosphorés présentent une toxicité avérée pour l'organisme humain. En effet, ces composés peuvent être impliqués dans le mécanisme d'inhibition des sérines protéases et, en particulier, de l'acétylcholinestérase, qui intervient dans les jonctions synaptiques et dont le dérèglement de l'activité peut empêcher le relâchement musculaire et ainsi provoquer la mort par asphyxie.

Ces composés sont notamment utilisés dans la formulation de certains insecticides, de pesticides ou encore d'agents chimiques de guerre (comme les composés organophosphorés de la série G ou de la série V).

Par ailleurs, des composés toxiques peuvent se répandre rapidement dans l'environnement en cas de risques NRCB-E (pour « *risques nucléaires, radiologiques, biologiques, chimiques et explosifs* »), résultant notamment d'accidents industriels, d'actes criminels (comme l'emploi d'armes toxiques) ou encore de catastrophes naturelles ou environnementales.

Or, du fait de la létalité élevée de ces composés et de leur prolifération, il s'avère important de pouvoir disposer de systèmes ou dispositifs permettant leur détection.

Certains dispositifs de détection utilisés à ce jour sont basés sur des technologies impliquant des moyens de mesure physique, telles que la spectroscopie à mobilité ionique, la photométrie de flamme, les spectroscopies IR et Raman, avec, pour difficultés, que ces systèmes nécessitent un appareillage complexe onéreux et pas forcément adaptés à tous les milieux d'intervention en termes de masse et d'encombrement, auxquelles s'ajoute l'expertise de l'opérateur à considérer.

Au vu de ce qui existe, les inventeurs se sont fixé pour objectif de proposer un nouveau matériau, utile pour la détection d'au moins un composé chimique, lequel matériau devant permettre la détection et, le cas échéant, la discrimination, du ou des composés chimiques et devant répondre à des critères de sensibilité, rapidité, portabilité, fiabilité.

### Exposé de l'invention

Aussi, l'invention a-t-elle comme objet, en premier lieu, un matériau, utile pour détecter au moins un composé chimique. Le matériau de l'invention comprend une couche C1 qui résulte de la congélation puis sublimation d'une mousse formée par une dispersion de bulles gazeuses dans une solution aqueuse moussante A1, la solution aqueuse moussante A1 comprenant au moins un indicateur de détection, au moins un agent tensioactif et, éventuellement, au moins un agent gélifiant.

Conformément à l'invention, le matériau est un « *matériau macroporeux* », c'est-à-dire un matériau comprenant des macropores, dont le diamètre des pores est supérieur à 50 nm (selon la définition de l'IUPAC).

Dans ce qui précède et ce qui suit, l'on précise que on entend par « *mousse* » un système biphasique comprenant une phase gazeuse (i.e. la dispersion de bulles gazeuses) et une phase liquide (i.e. la solution aqueuse moussante).

De plus, on entend par « *indicateur de détection* », une substance chimique capable de se transformer au contact d'au moins un composé chimique que l'on souhaite détecter, cette transformation étant le signe de la présence de ce composé chimique. Cette transformation se matérialise par un changement de couleur, lorsque l'indicateur de détection est un indicateur coloré (dit également indicateur de détection colorimétrique). Plus spécifiquement, lorsque l'indicateur de détection est un indicateur coloré, celui-ci correspond, classiquement, à une substance chimique qui prend au moins une couleur caractéristique en présence d'un composé chimique soit, en d'autres termes, une substance chimique qui présente au moins deux états colorés, un état coloré existant lorsque la substance chimique n'est pas en présence du composé chimique à détecter et au moins un autre état coloré lorsque la substance chimique est en présence du ou des composés chimiques à détecter. L'indicateur de détection peut également être un indicateur fluorescent (ou fluorophore), auquel cas la transformation se matérialise par un changement d'intensité d'émission de fluorescence, un décalage de longueur d'onde d'émission de florescence ou encore par un changement de forme du spectre d'émission lorsque cet indicateur est excité par une source d'excitation à une longueur d'onde donnée et lorsqu'il est en présence du composé chimique à détecter.

Par ailleurs, dans ce qui précède et ce qui suit, on entend par « *sublimation* », tout processus permettant de faire passer une substance de l'état solide à l'état gazeux, sans passer par l'état liquide. En d'autres termes, la sublimation permet de déshydrater la mousse ainsi congelée.

À cet égard, la congélation et la sublimation peuvent être réalisées par lyophilisation.

Selon une variante de l'invention, le matériau peut être constitué de la couche C1.

Comme mentionné précédemment, le matériau peut être utilisé pour la détection d'un seul composé chimique ou pour la détection de plusieurs (i.e. au moins deux) composés chimiques distincts.

Lorsque le matériau est utilisé pour la détection d'un seul composé chimique, alors la solution aqueuse moussante A1 comprend, avantageusement, un ou plusieurs indicateurs de détection permettant la détection de ce composé chimique.

Lorsque le matériau est utilisé pour la détection de plusieurs composés chimiques distincts, alors la solution aqueuse moussante A1 peut comprendre un seul indicateur de détection permettant la détection de tous les composés chimiques.

Cependant, lorsque le matériau est utilisé pour la détection de plusieurs composés chimiques distincts, on préfère que le matériau comprenne de plus une couche C2 qui résulte de la congélation puis sublimation d'une mousse formée par une dispersion de bulles gazeuses dans une solution aqueuse moussante A2, la solution aqueuse moussante A2 comprenant au moins un indicateur de détection, au moins un agent tensioactif et, éventuellement, au moins un agent gélifiant. Dans ce cas, les couches C1 et C2 forment ensemble un empilement (autrement dit, le matériau comprend un empilement d'au moins deux couches C1 et C2) et les solutions aqueuses moussantes A1 et A2 comprennent au moins un indicateur de détection différent.

Selon une variante de l'invention, le matériau peut être constitué de l'empilement d'au moins deux couches C1 et C2.

Plus spécifiquement, lorsque le matériau est utilisé pour la détection de plusieurs composés chimiques distincts, ce matériau comprend, avantageusement, autant de couches que de composés chimiques à détecter, étant entendu que les mousses à partir desquelles les couches sont obtenues comprennent, avantageusement, au moins un indicateur de détection différent, chaque indicateur de détection permettant la détection d'un composé chimique donné.

Selon les composés chimiques que l'on souhaite détecter, le ou les indicateurs de détection peuvent être choisis parmi les indicateurs colorés et/ou les indicateurs fluorescents.

Il va de soi que, lorsque le ou les indicateurs de détection sont des indicateurs colorés, ils sont choisis de manière à ce qu'ils présentent au moins un virage colorimétrique en présence du ou des composés chimiques que l'on souhaite détecter et sont choisis, de préférence, parmi ceux qui sont incolores et ceux qui présentent une couleur initiale - i.e. avant toute exposition à un ou plusieurs composés chimiques - de couleur claire, par exemple, dans les nuances de jaune pâle.

De plus, dans le cas où le matériau comprend (ou est constitué) de l'empilement d'au moins deux couches C1 et C2 et que les indicateurs de détections sont des indicateurs colorés, alors ces indicateurs sont avantageusement choisis de manière à ce qu'ils présentent au moins un virage colorimétrique contrasté les uns par rapport aux autres, de sorte à pouvoir discriminer les composés chimiques.

Les indicateurs colorés peuvent être choisis parmi les composés anthraquinoniques, les composés azoïques, les composés triarylméthanes, les composés xanthéniques, les composés indigoïques, les complexes métalliques, les composés comprenant au moins un groupe stilbène, les composés coumariniques, les composés comprenant au moins un groupe cyanine, les composés comprenant au moins un groupe phtalocyanine, les composés comprenant au moins un groupe porphyrine et les composés comprenant au moins un groupe hydrazone.

À titre d'exemples de composés anthraquinoniques, il peut être fait mention de la 1,4-dihydroxyanthraquinone, la 1-aminoanthraquinone, l'acide carminique, la 1,5-diaminoanthraquinone, la 1,2-diaminoanthraquinone, la 1,4-diamino-5-nitroanthraquinone, la 1,4,5,8-tétraaminoanthraquinone (aussi appelée « *Disperse Blue 1* » en anglais), la 1-méthylamino-4-(2-hydroxyéthyl)aminoanthraquinone (aussi appelée « *Disperse Blue* 3 » en anglais), la 1-amino-2-méthylanthraquinone (aussi appelée « *Disperse Orange 11* » en anglais) et la 1,4-*bis*-(p-tolylamino)anthraquinone (aussi appelé « *Solvent Green 3* » en anglais).

À titre d'exemples de composés azoïques, il peut être fait mention du 10-(2',4'-dinitrophénylazo)-9-phénanthrol, le 6-hydroxy-5-[(2-méthoxy-5-méthyl-4-sulfophényl)azo]-2-naphtalènesulfonate de disodium (aussi appelé « *Rouge Allura AC* »), le 4-diméthylaminoazobenzène (aussi appelé *« Jaune de méthyle* »), le 4-(2-carboxyphénylazo)-*N,N*-dipropylaniline (aussi appelé « *Propyl red* » en anglais), le chlorure de 3-(diéthylamino)-7-{(E)-[4-(diméthylamino)phényl]diazényl}-5-phénylphénazin-5-ium (aussi appelé « Vert *Janus* B »), le *N,N*-diméthyl-4,4'-azodianiline, la *N*-éthyl-1-((4-phényldiazényl)phényl)diazényl)naphtalène-2-amine (aussi appelé « *Sudan Red 7B* » en anglais), l'amarante, le dihydrochlorure de 4-[[3-[(2,4-diaminophényl)diazényl]phényl]diazényl]benzène-1,3-diamine (aussi appelé *« Brun de Bismarck Y* »), le 4-hydroxy-3-[(4-sulfo-1-naphtalényl)azo]-1-naphtalènesulfonate de disodium (aussi appelé « *Chromotrope FB* »), l'acide benzidinediazo-bis-1-naphtylamine-4-sulfonique (aussi appelé « *Rouge Congo* »), le 2,2'-[4-(4-aminophénylazo)phénylimino]diéthanol (aussi appelé « *Disperse Black 9* » en anglais), le 2,2'-[[4-[(4-nitrophényl)azo]phényl]imino]biséthanol (aussi appelé *« Disperse Red 19* » en anglais), le (4Z)-4-[(1-hydroxynaphthalène-2-yl-hydrazinylidène]-7-nitro-3-oxo Y-naphtalène-1-sulfonate de sodium (aussi appelé *« Noir ériochrome T* »), le 4'-(4-(diéthylamino)phénylazo)acétophénone, le 4-[(E)-(4-nitrophényl)diazényl]-*N-*phénylaniline (aussi appelé *« Disperse Orange 1* » en anglais), l'hélianthine (aussi appelée *« Méthylorange* »), la 4-(4-nitrophénylazo)aniline (aussi appelée *« Disperse Orange 3* » en anglais), le 4-[4-(phénylazo)-1-naphthylazo]phénol (aussi appelé « *Disperse Orange 13* » en anglais), le 3-[*N*-éthyle-4-(4-nitrophénylazo)phénylamino]propionitrile (aussi appelé *« Disperse Orange* 25 » en anglais), le 4-amino-5-hydroxy-3-(4-nitrophénylazo)-6-(phénylazo)naphtalène-2,7-disulfonate de sodium (aussi appelé « *Bleu noir naphtol* »), le (2,2-diméthyl-1,3-dihydropérimidine-6-yl)-(4-phénylazo-1-naphthyl)diazène (aussi appelé « *Sudan Black* B » en anglais), le 6-hydroxy-5-[(4-sulfonatophényl)azo]naphtalène-2-sulfonate de disodium (aussi appelé « *Jaune orangé S* »), la tartrazine, le bleu Evans, le 4-[4-(phénylazo)phénylazo]-o-crésol (aussi appelé «*Disperse Yellow* 7 » en anglais) et le 4'-nitro-4-diméthylaminoazobenzène.

À titre d'exemples de composés triarylméthanes, il peut être fait mention du vert de bromocrésol, du sel du bleu d'aniline diammonium, du bleu de bromophénol, le violet de m-crésol, le rouge de crésol, le violet de gentiane (aussi appelé « *Crystal Violet »* en anglais), le rouge de chlorophénol, le sel de sodium de l'hydroxyde de (4-(α-(p-(diéthylamino)phényl)-2,4-disulfobenzylidène)-2,5-cyclohexadiène-1-ylidène)diéthylammonium (aussi appelé « *Patent blue V sodium salt* » en anglais), le bleu de méthyle, l'acide rosolique, le violet de pyrocatéchol, le vert brillant BS, la base pararosaniline, la fuchsine, le bleu de thymol et le 4-(diméthylamino)-α-[4-(diméthylamino)phényl]-α-phényl-benzèneméthanol.

À titre d'exemples de composés xanthéniques, il peut être fait mention du chlorure de [9-(2-carboxyphényl)-6-diéthylamino-3-xanthénylidène]-diéthylammonium (aussi appelé « *Rhodamine 610* »), la rhodamine 6G éventuellement sous la forme de sel de perchlorate, la rhodamine B, la sulforhodamine 101 hydratée, la fluorescéinamine (en particulier isomère I) et le chlorure de rhodamine 110.

À titre d'exemples de composés indigoïques, il peut être fait mention de l'indigo.

À titre d'exemples de complexes métalliques, il peut être fait mention du 5-nitroso-6-oxidonaphthalène-2-sulfonate trisodique complexé par du fer(III) (aussi appelé « *Naphtol Green B* » en anglais).

À titre d'exemples de composés comprenant au moins un groupe stilbène, il peut être fait mention du colorant connu sous la terminologie anglaise « *Fluorescent Brightener* 28 » ou encore des composés décrits dans la demande française FR 2113676, tels que la 2,4-bis[p-(diméthylamino)styryl)quinoléine.

À titre d'exemples de composés coumariniques, il peut être fait mention de la 7-amino-4-(trifluorométhyl)coumarine, la 7-amino-4-méthylcoumarine, la 3-(2-*N-*méthylbenzimidazolyl)-7-*N,N*-diéthylaminocoumarine (aussi appelée *« Coumarin 30* » en anglais), la 2,3,6,7-tétrahydro-10-(3-pyridyl)-1H,5H,11H-[1]benzopyrano[6,7,8-ij]quinolizine-11-one (aussi appelée « *Coumarin 510* » en anglais), la 3-(2-Benzothiazolyl)-7-(diéthylamino)coumarine (aussi appelée « *Coumarin 6* » en anglais).

À titre d'exemples de composés comprenant au moins un groupe cyanine, il peut être fait mention du vert d'indocyanine, du perchlorate de 5,5'-dichloro-11-diphénylamino-3,3'-diéthyl-10,12-éthylènethiatricarbocyanine (aussi appelé « *IR140 »,* le (2E)-1,1,3-triméthyl-2-[5-(1,1,3-triméthylbenzo[e]indole ;iodide (aussi appelé « IR176 iodide »).

À titre d'exemples de composés comprenant au moins un groupe phtalocyanine, il peut être fait mention du chlorure de phtalocyanine de fer(III), d'acide phtalocyanine-4,4',4",4‴-tétrasulfonique de fer(III) et du 1,2,3,4,8,9,10,11,15,16,17,18,22,23,24,25-hexadécafluoro-29H,31H-phtalocyanine de cobalt(II), des composés comprenant un hydrate de sel monosodique d'oxygène.

À titre d'exemples de composés comprenant au moins un groupe hydrazone, il peut être fait mention d'hydrazones conjuguées, telles que celles décrites dans la demande française FR-A-2113669 (comme la 4-nitrobenzaldéhyde(2,4-dinitrophényl) hydrazone) ou d'hydrazones non conjuguées, telles que celles décrites dans la demande française (non encore publiée) FR 2303301.

Il est à noter que certains de ces indicateurs colorés peuvent présenter intrinsèquement les propriétés d'un fluorophore.

Outre ces indicateurs colorés présentant les propriétés d'un fluorophore, les indicateurs fluorescents peuvent être choisis parmi les oxydes fluorescents, les silicates fluorescents, les halosilicates fluorescents, les phosphates fluorescents, les halophosphates fluorescents, les borates fluorescents, les aluminates et gallates fluorescents, les molybdates et les tungstates fluorescents, les halides et oxyhalides fluorescents, les sulfates et les sulfites fluorescents.

À titre d'exemples d'oxydes fluorescents, il peut être fait mention des oxydes choisis parmi CaO:Bi³⁺ ; CaO:Cd²⁺ ; CaO:Eu³⁺ ; CaO:Eu³⁺,Na⁺ ; CaO:Mn²⁺ ; CaO:Pb²⁺ ; CaO:Sb³⁺ ; CaO:Sm³⁺ ; CaO:Tb³⁺ ; CaO:Ti⁺ ; CaO:Zn²⁺ ; ZnO:Al³⁺,Ga³⁺ ; ZnO:S ; ZnO:Se ; ThO₂:Pr³⁺ ; ThO₂:Tb³⁺ ; Y₂O₃:Bi³⁺ ; Y₂O₃:Er³⁺ ; Y₂O₃:Eu³⁺ ; Y₂O₃:Ho³⁺ ; Y₂O₃:Tb³⁺ ; La₂O₃:Bi³⁺ ; La₂O₃:Eu³⁺ ; La₂O₃:Pb ; LiInO₂:Eu³⁺ ; LiInO₂:Sm³⁺ ; LiLaO₂:Eu³⁺ ; NaYO₂:Eu³⁺ ; CaTiO₃:Pr³⁺ ; CaGeO₃:Mn²⁺ ; Mg₂TiO₄ :Mn⁴⁺ ; Zn₂GeO₄:Mn²⁺ ; YVO₄:Eu³⁺ ; LaVO₄:Eu^{3+ ;} YAsO₄:Eu³⁺ ; LaAsO₄:Eu³⁺ ; Ca₅(VO₄)₃Cl ; Mg₈Ge₂O₁₁F₂:Mn⁴⁺ ; CaY₂ZrO₆:Eu³⁺ et Mg₃SiO₃F₄:Ti^{4+.}

À titre d'exemples de silicates fluorescents, il peut être fait mention des silicates choisi parmi CaSiO₃:Ce³⁺ ; CaSiO₃:Eu²⁺ ; CaSiO₃:Pb²⁺ ; CaSiO₃:Ti⁴⁺ ; CaSiO₃:Pb²⁺,Mn²⁺ ; Be₂SiO₄:Mn²⁺ ; Mg₂SiO₄:Mn²⁺ ; Zn₂SiO₄:Mn²⁺,P ; Zn₂SiO₄:Mn²⁺,As⁵⁺; Zn₂SiO₄:Ti⁴⁺ ; (Zn,Be)₂SiO₄:Mn²⁺ ; SrSiO₄:Eu^{2+ ;} SrBaSiO₄:Eu²⁺ ; Ba₂SiO₄:Eu²⁺ ; Ba₂SiO₄:Ce³⁺,Li⁺,Mn²⁺ ; Ba₂SiO₅:Eu²⁺ ; Ba₂SiO₅:Pb²⁺ ; Y₂O₅:Ce³⁺ ; CaMgSiO₆:Eu²⁺ ; CaMgSiO₆:Eu²⁺,Mn⁺² ; Ca₂MgSiO₇:Eu²⁺ ; Ca₂MgSiO₇:Eu²⁺,Mn⁺² ; Sr₂MgSiO₇:Eu²⁺ ; Ba₂MgSiO₇:Eu²⁺ ; BaMgSiO₇:Eu²⁺ ; BaSrSiO₇ :Eu²⁺ ; Ba₂Li₂SiO_{y}:Eu²⁺ ; Ba₂Li₂SiO_{y}:Sn²⁺ ; Ba₂Li₂SiO_{y}:Sn²⁺,Mn²⁺ ; MgSrBa₂SiO₇:Eu²⁺ ; MgBa₂Si₂O₈:Eu²⁺,Mn²⁺ ; Sr₃MgSi₂O₈:Eu²⁺ ; CasB₂SiO₁₀:Eu³⁺ ; Ca₃Al₂SiO₃O₁₂:Eu²⁺ ; LiCeBa₄Si₄O₁₄:Mn²⁺ et LiCeSrBa₃Si₄O₁₄:Mn²⁺.

À titre d'exemples d'halosilicates fluorescents, il peut être fait mention des halosilicates choisis parmi LaSiO₃Cl:Ce³⁺ ; LaSiO₃Cl:Ce³⁺,Tb³⁺ ; Ca₃SiO₄Cl₂:Pb²⁺ ; Ca₃SiO₄Cl₂:Eu²⁺ ; Ba₅SiO₄Cl₆:Eu²⁺ et Sr₅Si₄O₁₀Cl₆:Eu²⁺.

À titre d'exemples de phosphates fluorescents, il peut être fait mention des phosphates choisis parmi YPO₄:Ce³⁺ ; YPO₄:Ce³⁺,Tb³⁺ ; YPO₄:Eu³⁺ ; YPO₄:Mn²⁺,Th⁴⁺ ; YPO₄:V⁵⁺ ; LaPO₄:Ce³⁺ ; LaPO₄:Eu³⁺ ; CaP₂O₆:Mn²⁺ ; Sr₂P₂O₇:Sn²⁺ ; Ca₂P₂O₇:Ce³⁺ ; Ca₂P₂O₇:Eu²⁺,Mn²⁺; Ca₂P₂O₇:Eu²⁺ ; Li₂CaP₂O₇:Ce³⁺,Mn²⁺ ; MgCaP₂O₇:Mn²⁺ ; BaTiP₂O₇ ; MgSrP₂O₇:Eu²⁺ ; MgBaP₂O₇:Eu²⁺ ; MgBaP₂O₇:Eu²⁺,Mn²⁺ ; Ca₃(PO₄)₂:Ce³⁺ ; CaB₂P₂O₉:Eu²⁺ ; Ca₃(PO₄)₂:Sn²⁺ ; Ca₃(PO₄)₂:Sn²⁺ ; Ca₃(PO₄)₂:Pb²⁺ ; Ca₃(PO₄)₂:Ti⁺ ; Ca₃(PO₄)₂:Ce³⁺ ; Ca₃(PO₄)₂:Eu²⁺ ; Ca₃(PO₄)₂:Eu²⁺ ; Ca₃(PO₄)₂:Eu²⁺,Mn²⁺ ; Sr₃(PO₄)₂:Sn²⁺,Mn²⁺ ; Sr₃(PO₄)₂:Sn²⁺ ; Sr₃(PO₄)₂:Eu²⁺ ; Ba₃(PO₄)₂:Eu²⁺ ; Na₃Ce(PO₄)₂:Tb³⁺ ; (Ca,Sr)₃(PO₄)₂:Sn²⁺,Mn²⁺ ; ZnMg₂(PO₄)₂:Mn²⁺ ; Zn₃(PO₄)₂:Mn²⁺ ; (Zn,Mg)₃(PO₄)₂:Mn²⁺ ; Mg₃Ca₃(PO₄)₄:Eu²⁺ ; MgSr₅(PO₄)₄:Sn²⁺ ; MgBa₂(PO₄)₂:Sn²⁺ ; CaSr₂(PO₄)₂:Bi³⁺ et Sr₂P₂O₇:Eu²⁺.

À titre d'exemples d'halophosphates fluorescents, il peut être fait mention des halophosphates choisis parmi Ca₅(PO₄)₃F:Mn²⁺ ; Ca₅(PO₄)₃F:Sb³⁺ ; Ca₅(PO₄)₃F:Sn²⁺ ; Ca₅(PO₄)₃Cl:Eu²⁺ **;** Ca₅(PO₄)₃Cl:Mn²⁺ ; Ca₅(PO₄)₃Cl:Sb³⁺ ; Ca₅(PO₄)₃Cl:Sn²⁺ ; Sr₅(PO₄)₃Cl:Eu²⁺ ; Sr₅(PO₄)₃Cl:Mn²⁺ ; Sr₅(PO₄)₃Cl:Sb³⁺ ; Sr₅(PO₄)₃F:Mn²⁺ ; Sr₅(PO₄)₃F:Sb³⁺ ; Sr₅(PO₄)₃F:Sb³⁺,Mn²⁺ ; Sr₅(PO₄)₃Cl:Eu²⁺,Pr³⁺ ; Sr₅(PO₄)₃F:Sn²⁺ ; Ba₅(PO₄)₃Cl:Eu²⁺ et Ca₂Ba₃(PO₄)₃Cl:Eu²⁺.

À titre d'exemples de borates fluorescents, il peut être fait mention des borates choisis parmi YBO₃:Ce³⁺ ; YBO₃:Eu³⁺ ; LaBO₃:Eu³⁺ ; SrO 3B₂O₃:Pb²⁺ ; SrO 3B₂O₃:Pb²⁺,Mn²⁺ ; SrO 3B₂O₃:Eu²⁺,Cl ; SrO 3B₂O₃:Sm²⁺ ; B₂O₄:Mn²⁺ ; MgYO₄:Eu³⁺ ; CaB₂O₄:Mn²⁺ ; CaB₂O₄:Pb²⁺ ; CaYBO₄:Bi³⁺ ; CaYBO₄:Eu³⁺ ; CaLaBO₄:Eu³⁺ ; ZnB₂O₄:Mn²⁺; Ca₂B₂O₅:Mn²⁺; LaAlB₂O₆:Eu³⁺ ; CaLaB₃O₇:Ce³⁺,Mn²⁺ ; SrB₄O₇:Eu²⁺(F,Cl,Br) ; SrB₄O₇:Pb²⁺; SrB₄O₇:Pb²⁺,Mn²⁺ ; Cd₂B₆O₁₁:Mn²⁺ ; YAl₃B₄O₁₂:Ce³⁺ ; YAl₃B₄O₁₂:Bi³⁺ ; YAl₃B₄O₁₂:Eu₃₊ ; YAl₃B₄O₁₂:Eu³⁺,Cr³⁺ ; YAl₃B₄O₁₂:Th⁴⁺,Ce³⁺,Mn²⁺ ; YAl₃B₄O₁₂:Ce³⁺,Tb³⁺ ; LaAl₃B₄O¹²:Eu³⁺; BaB₈O₁₃:Eu²⁺ ; SrB₈O₁₃:Sm²⁺ ; Ca₂B₅O₉Cl:Eu²⁺ ; Ca₂B₅O₉Cl:Pb²⁺ ; Ca₂B₅O₉Br:Eu²⁺ ; Sr₂B₅O₉Cl:Eu²⁺ ; CaYB0 8O₃ 7:Eu³⁺ ; La₂BO₆ 5:Pb²⁺ ; YAl₃B₄O₁₂:Ce³⁺,Mn²⁺.

À titre d'exemples d'aluminates et de gallates fluorescents, il peut être fait mention des aluminates et des gallates choisis parmi LiAlO₂:Fe³⁺ ; LiAlO₂:Mn²⁺ ; YalO₃:Ce³⁺ ; YalO₃:Eu³⁺ ; YalO₃:Sm³⁺ ; YalO₃:Tb³⁺ ; LaAlO₃:Eu³⁺ ; LaAlO₃:Sm³⁺ ; MgAl₂O₄:Mn²⁺ ; MgGa₂O₄:Mn²⁺ ; CaAl₂O₄:Mn²⁺ ; CaAl₂O₄:Eu²⁺ ; ZnAl₂O₄:Mn²⁺ ; ZnGa₂O₄:Mn²⁺ ; CaGa₂O₄:Mn²⁺ ; CaGa₄O₇:Mn²⁺ ; SrAl₂O₄:Eu²⁺ ; BaAl₂O₄:Eu²⁺ ; CaAl₄O₇:Pb²⁺,Mn²⁺ ; LiAl₅O₈:Fe³⁺; LiAl₅O₈:Mn²⁺; Y₄Al₂O₉:Eu³⁺ ; Y₃Al₅O₁₂:Ce³⁺; KAl₁₁O₁₇:Ti⁺; KGa₁₁O₁₇:Mn²⁺ ; BaMgAl₁₀O₁₇:Ce³⁺ ; Y₃Al₅O₁₂:Eu³⁺ ; BaMgAl₁₀O₁₇:Eu²⁺ ; BaMgAl₁₀O₁₇:Eu²⁺,Mn²⁺; Ca_{0.5}Ba_{0.5}Al₁₂O₁₉:Ce³⁺,Mn²⁺ ; SrAl₁₂O₁₉:Eu²⁺,Mn²⁺ ; SrGa₁₂O₁₉:Mn²⁺ et SrAl₁₂O₁₉:Ce³⁺,Mn²⁺.

À titre d'exemples de molybdates et de tungstates fluorescents, il peut être fait mention des molybdates et des tungstates choisis parmi CaMoO₄:Sm³⁺,Eu³⁺,Tb³⁺ ; SrMoO₄:Eu,Tb; SrMoO₄:Sm³⁺,Dy³⁺,Eu³⁺,Tb³⁺ ; MgWO₄:Eu³⁺,Tb³⁺ ; CaWO₄:Eu³⁺,Tb³⁺ ; Ca₃WO₆:Eu³⁺,Tb³⁺ ; Sr₃WO₆**:**Eu³⁺,Tb³⁺ ; Ba₃WO₆:Eu³⁺ et La₂W₃O₁₂:Eu³⁺.

À titre d'exemples d'halides et d'oxyhalides fluorescents, il peut être fait mention des halides et des oxyhalides choisis parmi MgF₂:Mn²⁺ ; CaF₂:Ce³⁺ ; CaF₂:Eu²⁺ ; CaF₂:Mn²⁺ ; CaF₂:Ce³⁺,Mn²⁺ ; CaF₂:Ce³⁺,Tb³⁺ ; CaCl₂:Eu²⁺ dans du SiO₂ ; CaCl₂:Eu²⁺,Mn²⁺ dans du SiO₂ ; Sr(Cl,Br,I)₂:Eu²⁺ dans du SiO₂; ZnF₂:Mn²⁺ ; BaₓSr₁₋ₓF₂:Eu²⁺; YF₃:Mn²⁺ ; YF₃:Mn²⁺,Th⁴⁺ ; KMgF₃:Eu²⁺ ; KMgF₃:Mn²⁺ ; LiAlF₄:Mn²⁺ ; K₂SiF₆:Mn⁴⁺ ; YOBr:Eu³⁺ ; YOCl:Ce³⁺ ; YOCl:Eu³⁺ ; YOF:Eu³⁺ ; YOF:Tb³⁺ ; LaOF:Eu³⁺ ; LaOCl:Bi³⁺ et LaOCl:Eu³⁺.

À titre d'exemples de sulfates et de sulfites fluorescents, il peut être fait mention des sulfates et des sulfites choisis parmi MgSO₄:Eu²⁺ ; MgSO₄:Pb²⁺ ; CaSO₄:Eu²⁺,Mn²⁺ ; CaSO₄:Pb²⁺ ; CaSO₄:Bi ; CaSO₄:Ce³⁺ ; CaSO₄:Ce³⁺,Mn²⁺ ; CaSO₄:Eu²⁺ ; SrSO₄:Bi ; SrSO₄:Ce³⁺ ; SrSO₄:Eu²⁺,Mn²⁺ ; SrSO₄:Eu²⁺ ; BaSO₄:Ce³⁺ ; BaSO₄:Eu²⁺ ; MgBa(SO₄)₂:Eu²⁺ ; Mg₂Ca(SO₄)₃:Eu²⁺ ; Mg₂Ca(SO₄)₃:Eu²⁺,Mn²⁺ ; Mg₂Sr(SO₄)₃:Eu²⁺ ; ZnS:Ag⁺,Cl⁻; ZnS:Au,In; ZnS:Cu,Sn ; ZnS:Cu⁺,Al³⁺ ; ZnS:Eu²⁺ ; ZnS:Sn,Ag ; ZnS:Sn²⁺,Li⁺ ; ZnSe:Cu⁺,Cl⁻ ; CdS:Ag⁺,Cl⁻ ; CdS:ln; ZnS-CdS:Cu,I; ZnS-CdS ; ZnS-CdS:Ag,Br,Ni ; ZnS-CdS:Ag⁺,Cl⁻ ; ZnS-CdS:Cu,Br; ZnS-ZnTe:Mn ; MgS:Eu²⁺ ; CaS:Bi³⁺ ; CaS:Bi³⁺,Na⁺ ; CaS:Ce³⁺ ; CaS:Cu⁺,Na⁺ ; CaS:Eu²⁺ ; CaS:Mn²⁺ ; CaS:La³⁺ ; CaS:Pb²⁺,Cl⁻ ; CaS:Pb²⁺ ; CaS:Pb²⁺,Mn²⁺ ; CaS:Pr³⁺,Pb²⁺,Cl⁻ ; CaS:Sb³⁺,Na⁺ ; CaS:Sm³⁺ ; CaS:Sn²⁺ ; CaS:Sn²⁺,F⁻ ; CaS:Tb³⁺ ; CaS:Tb³⁺,Cl⁻ ; CaS:Y³⁺ ; CaS:Yb²⁺; CaS:Yb²⁺,Cl⁻ ; SrS:Ce³⁺ ; SrS:Cu⁺,Na⁺ ; SrS:Eu²⁺ ; SrS:Mn²⁺ ; BaS:Au,K⁺ ; CaGa₂S₄:Ce³⁺ ; CaGa₂S₄:Eu²⁺ ; CaGa₂S₄:Mn²⁺ ; CaGa₂S₄:Pb²⁺ ; ZnGa₂S₄:Eu²⁺ ; ZnBa₂S₃:Mn ; SrAl₂S₄:Eu²⁺ ; SrGa₂S₄:Pb²⁺ ; BaAl₂S₄:Eu²⁺ ; SrGa₂S₄:Ce²⁺ ; SrGa₂S₄:Eu²⁺ ; BaGa₂S₄:Ce³⁺ ; BaGa₂S₄:Eu²⁺ ; Y₂O₂S:Eu³⁺ ; Y₂O₂S:Tb³⁺ et Gd₂O₂S:Tb³⁺.

Les indicateurs fluorescents peuvent aussi se présenter sous la forme d'un complexe organo-lanthanide comprenant un ligand choisi parmi, de préférence, les polyaminocarboxylates, les β-dicétonates, les tridentates pyridine-tétrazolates et les acides carboxyliques.

Conformément à l'invention, le ou les indicateurs colorés et/ou le ou les indicateurs fluorescents peuvent être encapsulés dans des particules solides en un (co)polymère, réticulé ou non, étant entendu que ces particules solides ne comprennent (ou n'encapsulent) qu'un seul indicateur coloré ou qu'un seul indicateur fluorescent, lorsque la solution aqueuse moussante A1 et - lorsque le matériau comprend de plus la couche C2 - la solution aqueuse moussante A2 comprennent chacune plusieurs indicateurs colorés et/ou plusieurs indicateurs fluorescents.

L'encapsulation permet notamment de limiter, voire éviter, la migration des indicateurs de détection dans les solutions aqueuses moussantes et, par conséquent, permet de limiter, voire éviter, toute interaction entre ceux-ci.

On précise que par « *(co)polymère* » on entend aussi bien un homopolymère qui est issu d'un seul monomère et qui est donc formé d'un seul motif répétitif, qu'un copolymère qui est issu de plusieurs (c'est-à-dire, deux ou plus de deux) monomères différents et qui est donc formé de plusieurs motifs répétitifs différents.

De telles particules peuvent être obtenues par (co)polymérisation d'un ou plusieurs monomères - cette (co)polymérisation pouvant alors être une (co)polymérisation en masse, en solution, en suspension, en dispersion ou en émulsion, induite par la chaleur ou des UV, en présence ou non d'un amorceur de polymérisation - ou bien par solubilisation/précipitation d'un ou plusieurs (co)polymères dans un solvant approprié.

Dans le cas où les particules solides sont en un (co)polymère réticulé, alors cette réticulation peut résulter :
- d'une fonctionnalisation du ou des monomères préalablement à la (co)polymérisation, auquel cas la (co)polymérisation s'accompagne d'une réticulation ;
- d'une fonctionnalisation du ou des monomères après la (co)polymérisation, auquel cas la (co)polymérisation et la réticulation sont réalisées en deux temps ; ou
- dans le cas d'un copolymère, d'une copolymérisation d'un ou plusieurs monomères monofonctionnels et d'un ou plusieurs monomères plurifonctionnels.

La réticulation permet de limiter au mieux la migration du ou des indicateurs de détection dans les solutions aqueuses moussantes.

De préférence, le (co)polymère est issu de la (co)polymérisation d'au moins un monomère choisi parmi les monomères acrylates comme, par exemple, le méthacrylate de méthyle, le triacrylate de triméthylolpropane, le pentaacrylate de dipentaérythritol et l'hexaacrylate de dipentaérythritol.

De préférence, le (co)polymère est un poly(méthacrylate de méthyle) (ou PMMA) réticulé par du triacrylate de triméthylolpropane (ou TMPTA).

Lesdites particules solides sont, de préférence, des microparticules, c'est-à-dire qu'elles présentent une taille moyenne en nombre comprise entre 0,1 µm et 100 µm et, mieux encore, entre 5 µm et 50 µm.

Cette taille moyenne peut être déterminée par des mesures en microscopie optique, par exemple à l'aide d'un microscope optique tel que celui commercialisé par Fisher Scientific, sous la référence Fisherbrand^{™} AX-500.

À cet égard, on précise que l'on entend par « *taille* », la plus grande des trois dimensions des microparticules.

Lorsque que le ou les indicateurs de détection sont encapsulés dans des particules solides, alors la solution aqueuse moussante A1 peut comprendre au total de 0,5 % à 10 % en masse et, de préférence, de 2 % à 5 % en masse de ces particules solides, par rapport à la masse totale de solution aqueuse moussante.

De même, lorsque le matériau comprend de plus la couche C2 et que le ou les indicateurs de détection sont encapsulés dans des particules solides, alors la solution aqueuse moussante A2 peut comprendre au total de 0,5 % à 10 % en masse et, de préférence, de 2 % à 5 % en masse de ces particules solides, par rapport à la masse totale de solution aqueuse moussante.

Conformément à l'invention, la solution aqueuse moussante A1 et - lorsque le matériau comprend de plus la couche C2 - la solution aqueuse moussante A2, comprennent chacune au moins un agent tensioactif, de préférence, de 0,05 % à 1,5 % en masse et, éventuellement, au moins un agent gélifiant, de préférence, de 0,00 % à 0,8 % en masse par rapport à la masse totale de solution aqueuse moussante.

Dans ce qui précède et ce qui suit, on précise que l'on entend par « *agents tensioactifs* », des agents tensioactifs organiques moussants, c'est-à-dire des agents tensioactifs comprenant une partie lipophile (apolaire) et une partie hydrophile (polaire) et présentant un équilibre hydrophile/lipophile (ou HLB pour « *Hydrophilic-Lipophilic Balance* » en anglais) compris entre 3 et 8. La valeur HLB d'un tel tensioactif peut facilement être obtenue par la méthode telle que décrite par J.T. Davies (dans « A *quantitative kinetic theory of emulsion type I. Physical Chemistry of the emulsifying agent », Gas*/*Liquid and Liquid*/*Liquid Interfaces, Proceedings of 2nd International Congress Surface Activity* 1957, 426-438, ci-après référence **[1]**) et aux tables de HLB pour différents groupes chimiques, disponibles pour l'homme du métier.

Le ou les agents tensioactifs peuvent être choisis parmi les tensioactifs non ioniques, les tensioactifs anioniques, les tensioactifs cationiques, les tensioactifs amphotères et les tensioactifs de structure de type bolaforme ou gemini, de préférence, les tensioactifs non ioniques, les tensioactifs anioniques et les tensioactifs cationiques et, mieux encore, les tensioactifs non ioniques.

Les tensioactifs non ioniques (ou dits neutres), sont des composés dont les propriétés tensioactives, notamment les propriétés hydrophiles, sont apportées par des groupements fonctionnels non chargés tels qu'un alcool, un éther, un ester ou encore un amide et peuvent contenir des hétéroatomes tels que l'azote ou l'oxygène. En raison de la faible contribution hydrophile de ces fonctions, les tensioactifs non ioniques sont le plus souvent polyfonctionnels.

Dans le cadre de la présente invention, les tensioactifs non ioniques peuvent notamment être choisis parmi les alcoxylates d'alkyles, les alcoxylates d'alcools gras, les alcoxylates d'amines grasses, les alcoxylates d'acides gras, les alcoxylates d'oxoalcools, les alcoxylates d'alkylphénols, les éthoxylates d'alkyles, les éthoxylates d'alcools gras, les éthoxylates d'amines grasses, les éthoxylates d'acides gras, les éthoxylates d'oxoalcools, les éthoxylates d'alkylphénols tels que les éthoxylates d'octylphénol et de nonylphénol, les alcools, les α-diols, les alkylphénols polyéthoxylés et poly-propoxylés ayant une chaîne carbonée, par exemple, C₈-C₁₈ et comprenant de 2 à 50 groupes d'oxydes d'éthylène ou d'oxydes de propylène, les polymères complexes d'oxydes de polyéthylène et de polypropylène, les copolymères d'oxyde d'éthylène et de propylène, les copolymères blocs d'oxydes de polyéthylène et de polypropylène tels que les copolymères triblocs POEPOP-POE, les condensats d'oxyde d'éthylène et de propylène sur des alcools gras, les amides gras polyéthoxylés ayant, de préférence, de 2 à 30 moles d'oxyde d'éthylène, les éthers polyéthoxylés ayant, de préférence, de 2 à 30 moles d'oxyde d'éthylène, les monoesters (monolaurate, monomyristate, monostéarate, monopalmitate, monooléate, etc) et polyesters d'acides gras et du glycérol, les amides gras polyglycérolés comprenant, en moyenne, de 1 à 5 et, plus particulièrement, de 1,5 à 4 groupes glycérol, les esters d'acide gras du sorbitan oxyéthylénés comprenant de préférence, de 2 à 30 moles d'oxyde d'éthylène, les monoesters (monolaurate, monomyristate, monostéarate, monopalmitate, monooléate, etc) et polyesters d'acides gras et du sorbitane, les monoesters de polyoxyéthylène sorbitane, les esters d'acides gras du sucrose, les esters d'acides gras du polyéthylèneglycol, les alkylpolyglucosides, les dérivés de *N*-alkylglucamine et les oxydes d'amines tels que les oxydes d'alkylamines, par exemple, en C₁₀-C₁₄ et les oxydes de *N-*acylaminopropylmorpholine, les polyols et en particulier les alkylates de glucose tels que l'hexanoate de glucose, les tensioactifs dérivant de glucoside (laurate de sorbitol) et de polyols tels que les éthers d'alcools glycérolés, les alcanolamides et leurs mélanges.

Plus particulièrement, les tensioactifs non ioniques peuvent être choisis parmi ceux décrits dans la demande internationale WO-A-2004/008463 (ci-après référence **[2]**), et notamment parmi ceux appartenant aux familles des alkylpolyglucosides ou des alkylpolyétherglucosides, dérivés du glucose et biodégradables, tels que ceux commercialisés par la société BASF sous les références commerciales Glucopon^{™} (Glucopon^{™} 215 par exemple) ou par la société SEPPIC sous les références commerciales Oramix^{™} (Oramix^{™} CG-110 par exemple).

Les tensioactifs anioniques sont, quant à eux, des tensioactifs dont la partie hydrophile est chargée négativement. Ils peuvent être choisis parmi les esters d'acide sulfurique, les esters d'acide phosphorique, les alkyles ou aryles sulfonates, les alkyles ou aryles sulfates, les alkyles ou aryles phosphates, les alkyles ou aryles sulfosuccinates et les alkyles et aryles sarcosinates associés à un contre ion tel qu'un ion ammonium, un ammonium quaternaire tel que le tétraéthylammonium ou le tétrabutylammonium et les cations tels que Na⁺, Li⁺, Ca²⁺, Mg²⁺, Zn²⁺ et K⁺.

Plus particulièrement, les tensioactifs anioniques peuvent être choisis parmi le paratoluènesulfonate de tétraéthylammonium, le dodécylsulfate de sodium (ou SDS), le laurylsarcosinate de sodium (ou sarcosyl), le palmitate de sodium, le stéarate de sodium, le myristate de sodium, le di(2-éthylhexyl) sulfosuccinate de sodium, le méthylbenzène sulfonate et l'éthylbenzène sulfonate.

Les tensioactifs cationiques, quant à eux, présentent typiquement au moins une chaîne hydrocarbonée et une tête polaire et sa partie hydrophile est chargée positivement. Ils peuvent être choisis parmi les ammoniums quaternaires comprenant au moins une chaîne aliphatique en C₄-C₂₂ associés à un contre-ion anionique choisi notamment parmi les dérivés du bore tels que le tétrafluoroborate et les ions halogénures tels que F⁻, Br⁻, I⁻ ou Cl⁻.

Plus particulièrement, les tensioactifs cationiques peuvent être choisis parmi le chlorure de tétrabutylammonium, le chlorure de tétradécylammonium, le bromure de tétradécyltriméthyle ammonium (TTAB), les halogénures d'alkylpyridinium portant une chaîne aliphatique et les halogénures d'alkylammonium.

Par ailleurs, le ou les agents gélifiants sont avantageusement des agents biodégradables et pseudo-plastiques. De préférence, ils sont choisis parmi les polymères hydrosolubles, les hydrocolloïdes, les hétéropolysaccharides tels que les polymères polyglucosidiques à chaînes ramifiées trisaccharidiques, les dérivés cellulosiques et les polysaccharides tels que les polysaccharides comprenant du glucose comme seul monomère.

Plus particulièrement, le ou les agents gélifiants utilisables dans le cadre de la présente invention peuvent être choisis parmi la gomme de xanthane, la gomme de guar, l'agar-agar, le carraghénane, l'alginate de sodium, le caséinate, la gélatine, la pectine, l'amidon, la cellulose, la carboxyméthylcellulose de sodium, la 2-hydroxyéthylcellulose (HEC) et le chitosane, préférence étant donnée à la gomme de xanthane et à la carboxyméthylcellulose de sodium.

La solution aqueuse moussante A1 et - lorsque le matériau comprend de plus la couche C2 - la solution aqueuse moussante A2, peuvent par exemple comprendre l'un au moins des indicateurs de détection mentionnés ci-dessus (et plus particulièrement, ceux choisis parmi le Disperse Black 9, le vert de bromocrésol, la 4-nitrobenzaldéhyde(2,4-dinitrophényl) hydrazone, le SrMoO₄:Eu,Tb et leurs mélanges), un alkylpolyglucoside, de la gomme de xanthane et, éventuellement, de la carboxyméthylcellulose de sodium.

Par ailleurs, il est à noter que les solutions aqueuses moussantes A1 et A2 peuvent être neutres, acides ou basiques en fonction du ou des indicateurs de détection qu'elles comprennent et en fonction des conditions de pH requises pour une bonne efficacité de ce ou ces indicateurs de détection. Un homme du métier saura parfaitement déterminer le pH le plus adapté pour ces solutions.

Conformément à l'invention, dans le cas où le matériau comprend l'empilement d'au moins deux couches C1 et C2, ces couches sont avantageusement séparées l'une de l'autre par au moins une couche tampon pour limiter, voire éviter, que les couches C1 et C2 se mélangent entre elles, ce qui risquerait de provoquer un changement de couleur à l'interface de ces deux couches. La ou les couches tampons permettent ainsi de stabiliser les couches C1 et C2 et d'améliorer la lecture de la présence du ou des composés chimiques à détecter.

Par exemple, les couches C1 et C2 peuvent être séparées l'une de l'autre par une couche tampon C3 qui résulte de la congélation puis sublimation d'une mousse formée par une dispersion de bulles gazeuses dans une solution aqueuse moussante A3, la solution aqueuse moussante A3 comprenant au moins un agent tensioactif, éventuellement au moins un agent gélifiant et/ou des particules solides en un (co)polymère, mais étant exempte d'indicateur de détection.

Dans ce cas, on préfère que la composition de la solution aqueuse moussante A3 ne diffère de la composition de la solution aqueuse moussante A1 et/ou de la composition de la solution aqueuse moussante A2 que par l'absence d'indicateur de détection.

En d'autres termes, la solution aqueuse moussante A3 peut comprendre le ou les mêmes agents tensioactifs et le ou les mêmes agents gélifiants (lorsqu'ils sont présents dans les solutions aqueuses moussantes A1 et/ou A2) et ce, dans les mêmes proportions que dans les solutions aqueuses moussantes A1 et/ou A2. De même, lorsque, dans les solutions aqueuses moussantes A1 et/ou A2, le ou les indicateurs de détection sont encapsulés dans des particules solides, alors la solution aqueuse moussante A3 peut comprendre des particules solides de même nature et dans les mêmes proportions mais étant exemptes d'indicateur de détection.

Les couches C1 et C2 peuvent aussi être séparées l'une de l'autre par au moins deux couches C3' et C3", la couche C3' étant au contact de la couche C1 et la couche C3" étant au contact de la couche C2. La couche C3' résulte de la congélation puis sublimation d'une mousse formée par une dispersion de bulles gazeuses dans une solution aqueuse moussante A3' et la couche C3" résulte de la congélation puis sublimation d'une mousse formée par une dispersion de bulles gazeuses dans une solution aqueuse moussante A3", chacune des solutions aqueuses moussantes A3' et A3" comprenant au moins un agent tensioactif, éventuellement au moins agent gélifiant et/ou des particules solides en un (co)polymère, mais étant exempte d'indicateur de détection.

Dans ce cas, on préfère que la composition de la solution aqueuse moussante A3' ne diffère de la composition de la solution aqueuse moussante A1 que par l'absence d'indicateur de détection tandis que la composition de la solution aqueuse moussante A3" ne diffère de la composition de la solution aqueuse moussante A2 que par l'absence d'indicateur de détection.

Ainsi, les couches tampons C3, C3' et C3" ont, respectivement, le même pH, la même densité et la même viscosité que les couches C1 et/ou C2, ce qui permet la superposition de ces différentes couches sans qu'elles se mélangent entre elles et sans provoquer un changement de couleur à l'interface de chacune de ces couches.

Le matériau tel que décrit ci-dessus permet ainsi la détection de la présence d'au moins un composé chimique, de préférence, sous la forme d'un gaz (i.e. de vapeurs), d'un liquide ou d'un aérosol (i.e. une dispersion de particules liquides ou solides dans un gaz tel que l'air).

Ce ou ces composés chimiques peuvent être des composés organiques et, plus particulièrement, des composés toxiques tels que des composés toxiques de guerre ou des composés TICs.

Plus particulièrement, les composés toxiques de guerres peuvent être choisis parmi les composés organophosphorés de la série G (comme le Soman, le Sarin ou le Tabun), les composés organophosphorés de la série V (comme le composé VX), d'autres composés organophosphorés, les composés vésicants (comme l'ypérite et la lewisite) et les composés arséniés.

Les composés TICs, quant à eux, peuvent être choisis parmi le chlore, l'ammoniac, le disulfure de carbone, l'acide cyanhydrique, l'acide nitrique, l'acide sulfurique et/ou le formaldéhyde.

Le matériau tel que décrit ci-dessus permet une lecture aisée et rapide de changement de couleur, d'intensité de fluorescence et/ou de décalage de longueur d'onde d'émission de florescence, notamment par la structure poreuse du matériau qui permet aux composés chimiques, et plus particulièrement lorsqu'ils sont sous la forme d'un gaz, de se répandre rapidement dans ce matériau et de réagir ainsi rapidement avec le ou les indicateurs de détection.

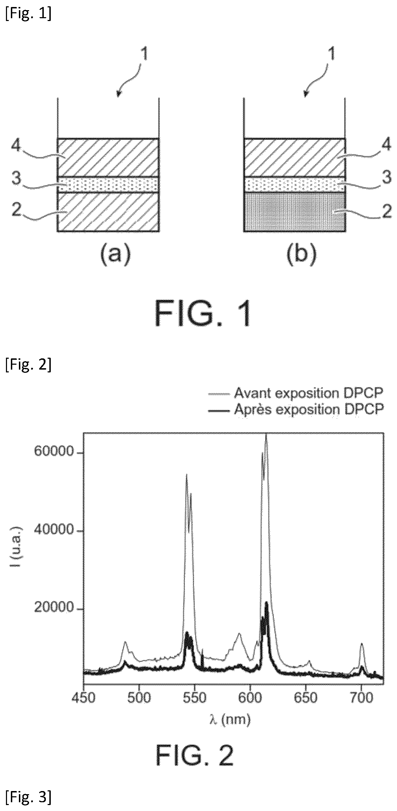

Ce principe est illustré sur la [Fig. 1] jointe en annexe, qui représente (partie (a)) un matériau (1) comprenant un empilement de deux couches (2 ; 4) qui comprennent un indicateur de détection différent, séparées l'une de l'autre par une couche tampon (3). La partie (b) de cette figure illustre ce matériau (1) après exposition à un composé chimique et montre que la couche (2), qui comprend un indicateur de détection apte à détecter le composé chimique, a changé de couleur, contrairement à l'autre couche (4) et à la couche tampon (3) qui n'ont pas changé de couleur.

De par les mousses à partir desquelles les couches C1, C2 et la ou les couches tampons sont obtenues, il est possible d'obtenir un matériau comprenant un empilement d'au moins deux couches distinctes, sans que celles-ci se mélangent. Par ailleurs, ces mousses permettent d'obtenir un matériau pas ou peu friable, c'est-à-dire résistant.

L'invention a aussi pour objet un procédé de préparation du matériau tel que décrit ci-dessus et comprenant une couche C1, le procédé comprenant au moins les étapes suivantes :
a) préparation de la mousse ;
b) dépôt sur un substrat de la mousse obtenue à l'issue de l'étape a) puis congélation de la mousse ;
c) sublimation de la mousse obtenue à l'issue de l'étape b) ; et
d) retrait éventuel du substrat ;
moyennant quoi le matériau est obtenu.

Elle a aussi pour objet un procédé de préparation du matériau tel que décrit ci-dessus et comprenant un empilement d'au moins deux couches C1 et C2. Ce procédé de préparation comprend au moins les étapes suivantes :
a) préparation des mousses ;
b) formation de l'empilement des couches C1 et C2 par :
   i) dépôts successifs sur un substrat des mousses obtenues à l'issue de l'étape a) ;
   ii) congélation des mousses, la congélation étant réalisée entre le dépôt des mousses et/ou après les dépôts successifs des mousses ;
c) sublimation de l'empilement obtenu à l'issue de l'étape b) ; et
d) retrait éventuel du substrat ;
moyennant quoi le matériau est obtenu.

Il va de soi que, lors de l'étape a), autant de mousses que de couches souhaitées dans l'empilement du matériau, sont préparées.

Par ailleurs, que ce soit dans le procédé de préparation du matériau comprenant la couche C1 ou comprenant l'empilement d'au moins deux couches C1 et C2, la ou les mousses sont typiquement préparées à l'étape a) en mélangeant les ingrédients destinés à entrer dans la composition de leur solution aqueuse moussante (i.e. eau, indicateur(s) de détection, agent(s) tensioactif(s) et, éventuellement agent(s) gélifiant(s), tels que décrits précédemment) puis sont générées par tout dispositif de génération de mousse décrit dans l'art antérieur et connu de l'homme du métier. Plus particulièrement, il s'agit de dispositifs assurant le mélange gaz-liquide, notamment par agitation mécanique, par barbotage, par mélangeur statique comprenant ou non des billes, par générateur de mousse à tube à microbilles, par des dispositifs tels que décrits dans la demande internationale WO-A-02/043847 (ci-après référence **[3]**) ou encore par tout autre dispositif, notamment les systèmes à buses ou venturi permettant des débits importants (généralement compris entre 1 et 1000 m³/h).

L'étape a) du procédé de préparation du matériau comprenant la couche C1 ou comprenant l'empilement d'au moins deux couches C1 et C2, peut comprendre l'éventuelle encapsulation d'un ou de plusieurs indicateurs colorés et/ou indicateurs fluorescents dans des particules solides en un (co)polymère, telles que décrites ci-avant, étant entendu que chaque particule solide ne comprend qu'un seul indicateur coloré ou qu'un seul indicateur fluorescent lorsque les solutions aqueuses moussantes comprennent plusieurs indicateurs colorés et/ou plusieurs indicateurs fluorescents.

L'étape a) peut également comprendre l'éventuelle formation de particules solides en un (co)polymère, ne comprenant pas d'indicateur de détection.

Il va de soi que, dans le cas où le matériau comprend l'empilement d'au moins deux couches C1 et C2, les mousses à partir desquelles ces couches sont obtenues sont déposées successivement, lors de l'étape b), de manière à obtenir l'empilement souhaité.

Par exemple, l'empilement peut être un empilement des couches C1 et C2, ou bien de la couche C1, de la couche tampon C3 puis de la couche C2, ou encore de la couche C1, de la couche tampon C3', de la couche tampon C3" puis de la couche C2.

Le substrat sur lequel la ou les mousses sont déposées, peut être un contenant, permettant d'améliorer la tenue mécanique du matériau.

Le contenant peut être tout type de contenant classique, tel qu'un flacon, une bouteille, un tube à essai, un bécher, etc. Il peut également s'agir d'un tube, tel qu'un tube souple fermé à l'une au moins de ses extrémités. Le contenant permet ainsi de donner la géométrie souhaitée au matériau.

Le contenant est choisi de manière à ce qu'il n'interfère pas lors de la détection de la présence du ou des composés chimiques. Aussi, le contenant est préférentiellement transparent et peut être en plastique (tel qu'en polypropylène, polyéthylène, polystyrène, acrylonitrile-butadiène-styrène, polyméthacrylate de méthyle, polyéthylène téréphtalate, polyamide 6, polyoxyde de méthylène, polycarbonate, etc.), en verre, en quartz ou encore en saphir. Plus particulièrement, lorsqu'au moins un indicateur fluorescent est présent dans le matériau, le contenant est avantageusement en quartz.

Par ailleurs, la congélation est, de préférence, réalisée à une température comprise entre - 200 °C et - 10 °C et, mieux encore, entre - 20 °C et - 15 °C et, de préférence, pendant une durée allant de quelques minutes à plusieurs heures, par exemple de 1 heure à 24 heures.

Conformément à l'invention, la congélation peut être réalisée soit à l'aide d'un congélateur soit à l'aide d'un fluide cryogénique tel que l'azote liquide.

Ensuite, l'étape de sublimation est réalisée sous vide, par exemple à une pression comprise entre 0,04 mbar (soit 4 Pa) et 0,2 mbar (soit 20 Pa) et est réalisée, de préférence, pendant plusieurs heures à plusieurs jours, par exemple, pendant 2 jours.

Conformément à l'invention, les étapes de congélation et de sublimation peuvent être réalisées par lyophilisation.

Le matériau ainsi obtenu présente, avantageusement, une densité comprise entre 0,005 g.cm⁻³ et 0,03 g.cm⁻³. Cette densité peut être classiquement déterminée en mesurant le volume de de l'ensemble de la ou des couches formées puis en pesant le matériau obtenu après sublimation.

L'invention se rapporte également à un matériau comprenant une couche C1 ou à un matériau comprenant un empilement d'au moins deux couches C1 et C2, susceptibles d'être obtenus par les procédés tels que décrits précédemment

L'invention a aussi pour objet l'utilisation du matériau tel que décrit précédemment pour détecter la présence d'au moins un composé chimique présent dans un milieu.

Conformément à l'invention, l'utilisation du matériau comprend, avantageusement, une mise en contact du matériau de l'invention avec le milieu susceptible de comprendre le ou les composés chimiques, le milieu étant, de préférence, sous la forme d'un gaz (tel que de l'air), d'un liquide ou d'un aérosol.

Le ou les composés chimiques susceptibles d'être détectés peuvent être des composés organiques et, plus particulièrement, des composés toxiques tels que des composés toxiques de guerre et/ou des composés TICs.

Plus particulièrement, les composés toxiques de guerres peuvent être choisis parmi les composés organophosphorés de la série G (comme le Soman, le Sarin ou le Tabun), les composés organophosphorés de la série V (comme le composé VX), d'autres composés organophosphorés, les composés vésicants (comme l'ypérite et la lewisite) et les composés arséniés.

Les composés TICs, quant à eux, peuvent être choisis parmi le chlore, l'ammoniac, le disulfure de carbone, l'acide cyanhydrique, l'acide nitrique, l'acide sulfurique ou le formaldéhyde.

Une fois la mise en contact réalisée et, éventuellement, après un temps d'attente, la présence du ou des composés chimiques peut être déduite en fonction de la réponse du matériau, par exemple, par un changement de couleur, lorsque le ou les indicateurs de détection sont des indicateurs colorés et/ou par un changement d'intensité d'émission de fluorescence et/ou par décalage de longueur d'onde d'émission de florescence lorsque le ou les indicateurs de détection sont des indicateurs fluorescents.

À cet égard, lorsque le ou les indicateurs de détection sont des indicateurs colorés, l'opérateur pourra se baser sur une échelle colorimétrique associée au matériau de l'invention, qui définira, pour tous les composés chimiques susceptibles d'être détectés par le matériau, le changement de couleur correspondant, cette échelle colorimétrique pouvant être déterminée par des essais préalables, pour chacun des matériaux et des composés chimiques destinés à être détectés par ces matériaux.

Par ailleurs, lorsque le ou les indicateurs de détection sont des indicateurs fluorescents, l'opérateur pourra se baser sur les spectres d'émissions de fluorescence associés au matériau de l'invention, qui définira, pour tous les composés chimiques susceptibles d'être détectés par le matériau, le changement d'intensité d'émission de fluorescence, le décalage de longueur d'onde d'émission de florescence correspondant ou le changement de forme du spectre d'émission, ces spectres pouvant être déterminés par des essais préalables, pour chacun des matériaux et des composés chimiques destinés à être détectés par ces matériaux.

La déduction pourra se faire à l'œil nu ou *via* des moyens opto-électroniques tels qu'un fluorimètre.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### Brève description des figures

[Fig. 1], déjà commentée, illustre le principe général de détection conforme à l'invention.
[Fig. 2] et [Fig. 3] représentent, respectivement, les spectres d'émission de fluorescence de deux couches, comprises dans un matériau de l'invention, avant et après exposition à un composé chimique ; sur ces figures, l'axe des abscisses correspond aux longueurs d'ondes d'émission, exprimées en nm et notées λ, tandis que l'axe des ordonnées correspond à l'intensité de fluorescence émise, exprimée en unités arbitraires (u.a.) et notée I.

### Exposé détaillé de modes de réalisation particuliers

### 1. Préparation de particules solides copolymériques

### 1.1 Encapsulation du Disperse Black 9 dans des particules solides de PMMA/TMPTA

L'encapsulation du Disperse Black 9 dans des particules de PMMA/TMPTA (c'est-à-dire de poly(méthacrylate de méthyle) réticulé par du triacrylate de triméthylolpropane) est réalisée selon le protocole suivant :
1°) 5 mg de Disperse Black 9 préalablement broyé et 50 mg de photoamorceur Irgacure^{™} 819 (fourni par BASF avec la référence commerciale 56415892) sont mis en suspension dans 20 mL de cyclohexane puis passés aux ultrasons;
2°) la suspension ainsi obtenue est placée sous agitation magnétique dans une cuve UV (fournie par Hönle, sous la référence *UVA-cube100; 365 nm; ^{~}4 mW*/*cm²*);
3°) toujours sous agitation, une solution comprenant 0,2 mL de MMA et 0,8 mL de TMPTA est introduite dans la suspension à l'aide d'une seringue ;
4°) la suspension obtenue à l'issue du point 3°) est irradiée sous UV pendant 4 minutes ; elle passe alors d'un aspect transparent à un aspect laiteux ;
5°) du cyclohexane est ensuite ajouté pour éliminer le photoamorceur résiduel ;
6°) la suspension est ensuite centrifugée à 10 000 rpm pendant 5 minutes puis le cyclohexane est retiré et remplacé par de l'éthanol ;
7°) la suspension est une nouvelle fois centrifugée à 10 000 rpm pendant 5 minutes pour éliminer, cette fois-ci, le Disperse Black 9 résiduel non encapsulé ; et enfin,
8°) les particules ainsi obtenues dans la suspension sont récupérées par filtration sur un filtre plissé, rincées à l'eau et séchées à température ambiante.

### 1.2 Encapsulation de la 4-nitrobenzaldéhyde(2,4-dinitrophényl) hydrazone et du vert de bromocrésol dans des particules solides de PMMA/TMPTA

Le même protocole que celui décrit au point 1.1 ci-dessus est mis en œuvre, en utilisant respectivement de la 4-nitrobenzaldéhyde(2,4-dinitrophényl) hydrazone et du vert de bromocrésol, en lieu et place du Disperse Black 9.

### 1.3 Préparation de particules solides de PMMA/TMPTA ne comprenant pas d'indicateur coloré

Les particules de PMMA/TMPTA exemptes d'indicateur coloré sont obtenues en mettant en œuvre les mêmes étapes que celles décrites au point 1.1 ci-avant, sans toutefois utiliser d'indicateur coloré lors de l'étape 1°).

### 2. Préparation des mousses M1 à M7

Cinq mousses M1 à M5 sont préparées à partir de solutions aqueuses moussantes selon les compositions indiquées dans le tableau I suivant et selon les étapes suivantes :
1) mélange, sous agitation magnétique et à température ambiante, de l'eau, du Glucopon^{™} (commercialisé par la société BASF, sous la référence commerciale Glucopon^{™}215 UP) et de la gomme de Xanthane (commercialisée par la société Sigma-Aldrich, sous la référence commerciale G1253) ;
2) si besoin, ajout d'acide phosphorique à 1 mol/L jusqu'au pH souhaité ;
3) ajout du ou des indicateurs de détection,
4) mélange de la solution à l'aide d'une spatule jusqu'à l'obtention d'une mousse.

**[Table 1]**

| **Tableau I** | | | | | |
|---|---|---|---|---|---|
| | **Eau déionisée (g)** | **Glucopon^{™} (g)** | **Gomme de xanthane (g)** | **H₃PO₄ (1mol/L)** | **Indicateur(s) de détection** |
| **M1** | 4,5 | 0,0456 | 0,0137 | - | Disperse Black 9 encapsulé : 0,170 g |
| **M2** | 4,5 | 0,0456 | 0,0137 | - | 4-nitrobenzaldéhyde(2,4-dinitropéhnyl) hydrazone encapsulé : 0,170 g |
| **M3** | 4,5 | 0,0456 | 0,0137 | pH = 4 | Vert de bromocrésol encapsulé : 0,170 g |
| **M4** | 1,5 | 0,0152 | 0,0046 | - | Disperse Black 9 encapsulé : 0,0567 g ; SrMoO₄:Eu,Tb : 0,1 g |

Deux autres mousses M6 et M7 comprenant de la carboxyméthylcellulose de sodium (plus simplement notée CMC) sont préparées à partir de mousses correspondant respectivement aux mousses M1 et M3 mais qui ont été préparées de manière à en obtenir 6 g.

Pour ce faire, 0,385 g d'une solution de CMC (8 % massiques ; Mw ≈ 90 000 g/mol commercialisée par Sigma-Aldrich sous la référence 419273) sont ajoutés à 6 g de chacune des mousses correspondant aux mousses M1 et M3. Les mélanges obtenus sont ensuite agités à l'aide d'une spatule jusqu'à l'obtention d'une mousse.

### 3. Préparation des mousses M_{T}1 et M_{T}3, exemptes d'indicateurs de détection

Deux mousses M_{T}1 et M_{T}3 sont préparées, respectivement, de la même façon (avec les mêmes composés et dans les mêmes proportions) que les mousses M1 et M3, à l'exception toutefois que les indicateurs colorés encapsulés sont remplacés par les particules solides de PMMA/TMPTA exemptes d'indicateurs de détection obtenues au point 1.3 ci-avant.

### 4. Préparation et utilisation de matériaux selon l'invention

### 4.1 Exemple 1

La mousse M1 est déposée, sur une épaisseur d'environ 1 cm, à l'intérieur d'un flacon en plastique transparent, puis est trempée dans de l'azote liquide pendant 1 minute.

Les mêmes opérations sont mises en œuvre d'abord avec M2 puis avec M3 (de manière à obtenir un empilement M1-M2-M3) et l'ensemble subi ensuite une sublimation, sous vide, pendant 2 jours.

Un papier comprenant du diphénylchlorophosphate (plus simplement noté DPCP), simulant un composé toxique, est introduit dans le flacon comprenant l'empilement M1-M2-M3. Ce papier est collé au bouchon du flacon de manière à ce qu'il ne soit pas en contact direct avec l'empilement.

Après 6 heures d'exposition de l'empilement aux vapeurs du DPCP, il est observé que la couche obtenue à partir de M1 passe d'une coloration jaune pâle à une coloration violette, tandis que les deux autres couches obtenues à partir de M2 et M3 ne changent pas de couleur. Ainsi, la couche obtenue à partir de M1 permet de détecter du DPCP.

### 4.2 Exemple 2

La mousse M4 est déposée, sur une épaisseur d'environ 1 cm, à l'intérieur d'un flacon en plastique transparent, puis est trempée dans de l'azote liquide pendant 1 minute. Ensuite, la mousse M5 est déposée sur la couche de la mousse M4 précédemment congelée puis l'ensemble est à nouveau trempé dans de l'azote liquide pendant 1 minute.

L'ensemble subi ensuite une sublimation, sous vide, pendant 2 jours.

Le matériau est ensuite démoulé du flacon et un échantillon de la couche obtenue à partir de la mousse M4 est exposé à une goutte de DPCP, tandis qu'un échantillon de la couche obtenue à partir de la mousse M5 est exposé à une goutte d'ammoniaque (NH₄OH).

Il est alors observé un changement de couleur du jaune pâle vers le violet pour la couche obtenue à partir de M4 et un changement de couleur du jaune pâle vers le bleu pour la couche obtenue à partir de M5. Ainsi, la couche obtenue à partir de M4 permet de détecter du DPCP tandis que la couche obtenue à partir de M5 permet détecter du NH₄OH.

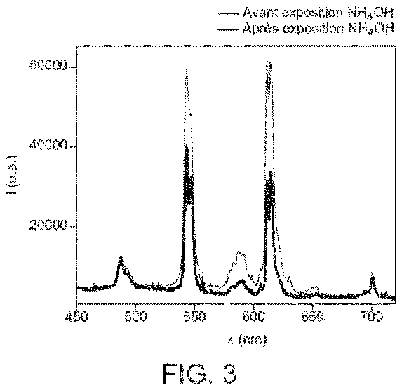

Par ailleurs, les figures 2 et 3 montrent les spectres d'émission de fluorescence de chacune de ces couches avant et après exposition au DPCP ou au NH₄OH.

La figure 2, représente le spectre d'émission de fluorescence de la couche obtenue à partir de M4, avec une excitation à une longueur d'onde de 310 nm. Le spectre montre que, avant exposition au DPCP, un pic d'intensité de 54761 u.a. est observé à 543,3 nm et un pic d'intensité de 65535 u.a. est observé à 614,4 nm, alors que, après exposition au DPCP, un pic d'intensité de 14029 u.a. est observé à 534,3 nm et un pic d'intensité de 212634 u.a. est observé à 614,4 nm.

La figure 3, représente le spectre d'émission de fluorescence de la couche obtenue à partir de M4, avec une excitation à une longueur d'onde de 310 nm. Le spectre montre que, avant exposition au NH₄OH, un pic d'intensité de 59644 u.a. est observé à 543,3 nm et un pic d'intensité de 61352 u.a. est observé à 614,4 nm, alors que, après exposition au NH₄OH, un pic d'intensité de 40622 u.a. est observé à 543,3 nm et un pic d'intensité de 33399 u.a. est observé à 614,4 nm.

Ces figures confirment que la couche obtenue à partir de M4 permet de détecter du DPCP tandis que la couche obtenue à partir de M5 permet de détecter du NH₄OH.

### 4.3 Exemple 3

La mousse M1 est déposée à l'intérieur d'un flacon en plastique transparent, sur une épaisseur d'environ 1 cm.

La mousse M_{T}3 puis M3 sont ensuite déposées, de manière à obtenir un empilement M1-M₇3-M3. L'ensemble est ensuite placé dans un congélateur à -20°C pendant une nuit avant subir une sublimation, sous vide, pendant 1 jour.

Le matériau est tout d'abord exposé à des vapeurs de DPCP. Il en résulte que seule la couche obtenue à partir de M1 change de couleur (du jaune pâle vers le violet).

Le matériau est ensuite exposé à des vapeurs d'ammoniaque. Cette fois-ci, un changement de couleur de la couche obtenue à partir de M3 est observé (du jaune pâle vers le bleu) tandis que la couche obtenue à partir de M1 conserve sa couleur violette.

Aucun changement de couleur n'est observé pour la couche tampon M_{T}3.

Cet exemple montre que le matériau de l'invention permet la détection ainsi que la discrimination de composés chimiques différents.

Par ailleurs, grâce à la présence de la couche tampon obtenue à partir de M_{T}3, aucune interaction ou interférence entre les deux couches M1 et M3 n'est observée.

Il est également constaté que le matériau obtenu dans cet exemple est plus résistant (ne présente aucune fissure) par rapport aux matériaux obtenus dans les exemples précédents, ce qui est notamment dû à l'étape de congélation réalisée à l'aide d'un congélateur.

### 4.4 Exemple 4

La mousse M6 est déposée dans un tube souple en plastique transparent, préalablement fermé à l'une de ses extrémités, sur une épaisseur d'environ 1 cm. Les mousses M_{T}1, M_{T}3 et M7 sont ensuite successivement déposées sur la couche de M6 de manière à obtenir l'empilement M6-M_{T}1-M_{T}3-M7. Les mousses M_{T}1 et M_{T}2 ont une épaisseur d'environ 0,5 cm tandis que la couche M7 a une épaisseur d'environ 1 cm.

La deuxième extrémité du tube est ensuite fermée.

Le tube est placé dans un congélateur pendant une nuit, avant de subir une sublimation, sous vide, pendant 1 jour.

Le matériau obtenu présente une tenue mécanique améliorée par rapport à ceux obtenus dans les exemples précédents, notamment dû à la présence de CMC dans les mousses M6 et M7.

Les deux extrémités du tube sont ensuite ouvertes puis le matériau est exposé à des vapeurs de DPCP. Là encore, seule la couche obtenue à partir de M6 change de couleur (du jaune pâle vers le violet).

Le matériau est ensuite exposé à des vapeurs d'ammoniaque et il en résulte que la couche obtenue à partir de M7 passe du jaune pâle à bleu, tandis que la couche obtenue à partir de M6 conserve sa couleur violette.

Aucun changement de couleur n'est observé pour les couches tampons obtenues à partir de M_{T}1 et M_{T}3.

Par ailleurs, la couche tampon M_{T}1 ayant le même pH que la couche M6, aucune interaction - et donc aucun changement de couleur - n'est observé à l'interface de ces deux couches. Il est en de même pour les couches M_{T}3 et M7.

### 5. Contre-exemple : matériau n'étant pas obtenu à partir de mousses

Une solution S1 est préparée en mélangeant 0,16 g d'une solution de CMC (8% massiques, Mw ≈ 90 000 g/mol) avec 3 g d'eau déionisée.

Ensuite, quatre solutions sont préparées à partir de cette solution S1 :
- une première solution est obtenue en mélangeant 1 g de S1, préalablement acidifiée à un pH de 4 par de l'acide phosphorique à 1 mol/L, avec 0,038 g de vert de bromocrésol encapsulé ;
- une deuxième solution est obtenue en mélangeant 0,5 g de S1, préalablement acidifiée à un pH de 4 par de l'acide phosphorique à 1 mol/L, avec 0,019 g de particules de PMMA/TMPTA obtenues au point 1.3 ci-avant ;
- une troisième solution est obtenue en mélangeant 0,5 g de S1 avec 0,019 g de particules de PMMA/TMPTA obtenues au point 1.3 ci-avant ; puis
- une quatrième solution est obtenue en mélangeant 1 g de S1 avec 0,038 g de Disperse Black 9 encapsulé.

Les quatre solutions ainsi obtenues sont déposées les unes sur les autres, dans l'ordre décrit ci-dessus, dans un tube souple en plastique transparent préalablement fermé à l'une de ses extrémités.

Il est observé que les solutions se mélangent entre elles et qu'un empilement de celles-ci est donc impossible à obtenir.

Ce contre-exemple montre donc l'importance des mousses à partir desquelles les couches de l'empilement du matériau sont obtenues.

### Références citées

**[1]** « A quantitative kinetic theory of emulsion type I. Physical Chemistry of the emulsifying agent », Gas/Liquid and Liquid/Liquid Interfaces, Proceedings of 2nd International Congress Surface Activity 1957, 426-438
**[2]** WO-A-2004/008463
**[3]** WO-A-02/043847

## Revendications

1. Matériau comprenant une couche C1 qui résulte de la congélation puis sublimation d'une mousse formée par une dispersion de bulles gazeuses dans une solution aqueuse moussante A1, la solution aqueuse moussante A1 comprenant au moins un indicateur de détection, au moins un agent tensioactif et, éventuellement, au moins un agent gélifiant, et comprenant de plus une couche C2 qui résulte de la congélation puis sublimation d'une mousse formée par une dispersion de bulles gazeuses dans une solution aqueuse moussante A2, la solution aqueuse moussante A2 comprenant au moins un indicateur de détection, au moins un agent tensioactif et, éventuellement, au moins un agent gélifiant, dans lequel :
- les couches C1 et C2 forment ensemble un empilement; et
- la solution aqueuse moussante A1 et la solution aqueuse moussante A2 comprennent au moins un indicateur de détection différent.

2. Matériau selon la revendication 1, dans lequel le ou les indicateurs de détection sont choisis parmi les indicateurs colorés et les indicateurs fluorescents.

3. Matériau selon la revendication 2 dépendante de la revendication 1, dans lequel le ou les indicateurs colorés et/ou le ou les indicateurs fluorescents sont encapsulés dans des particules solides en un (co)polymère, chaque particule solide ne comprenant qu'un seul indicateur coloré ou qu'un seul indicateur fluorescent lorsque la solution aqueuse moussante A1 comprend plusieurs indicateurs colorés et/ou plusieurs indicateurs fluorescents.

4. Matériau selon la revendication 3, dans lequel la solution aqueuse moussante A1 comprend au total de 0,5 % à 10 % en masse et, de préférence, de 2 % à 5 % en masse des particules solides encapsulant un indicateur de détection, par rapport à la masse totale de solution aqueuse moussante.

5. Matériau selon la revendication 2, dans lequel le ou les indicateurs colorés et/ou le ou les indicateurs fluorescents sont encapsulés dans des particules solides en un (co)polymère, chaque particule solide ne comprenant qu'un seul indicateur coloré ou qu'un seul indicateur fluorescent lorsque la solution aqueuse moussante A2 comprend plusieurs indicateurs colorés et/ou plusieurs indicateurs fluorescents.

6. Matériau selon la revendication 5, dans lequel la solution aqueuse moussante A2 comprend au total de 0,5 % à 10 % en masse et, de préférence, de 2 % à 5 % en masse des particules solides encapsulant un indicateur de détection, par rapport à la masse totale de solution aqueuse moussante.

7. Matériau selon l'une quelconque des revendications 3 à 6, dans lequel le (co)polymère est issu de la (co)polymérisation d'au moins un monomère choisi parmi les monomères acrylates tel que le méthacrylate de méthyle, le triacrylate de triméthylolpropane, le pentaacrylate de dipentaérythritol et l'hexaacrylate de dipentaérythritol.

8. Matériau selon la revendication 7, dans lequel le (co)polymère est un poly(méthacrylate de méthyle) réticulé par du triacrylate de triméthylolpropane.

9. Matériau selon la revendication 1, dans lequel la solution aqueuse moussante A1 comprend de 0,05 % à 1,5 % en masse d'agent(s) tensioactif(s) et de 0,00 % à 0,8 % en masse d'agent(s) gélifiant(s), par rapport à la masse totale de solution aqueuse moussante.

10. Matériau selon la revendication 1, dans lequel la solution aqueuse moussante A2 comprend de 0,05 % à 1,5 % en masse d'agent(s) tensioactif(s) et de 0,00 % à 0,8 % en masse d'agent(s) gélifiant(s), par rapport à la masse totale de solution aqueuse moussante.

11. Matériau selon la revendication 1, dans lequel les couches C1 et C2 sont séparées l'une de l'autre par une couche tampon C3 qui résulte de la congélation puis sublimation d'une mousse formée par une dispersion de bulles gazeuses dans une solution aqueuse moussante A3, la solution aqueuse moussante A3 comprenant au moins un agent tensioactif, éventuellement au moins un agent gélifiant et/ou des particules solides en un (co)polymère, mais étant exempte d'indicateur de détection.

12. Matériau selon la revendication 11, dans lequel la composition de la solution aqueuse moussante A3 ne diffère de la composition de la solution aqueuse moussante A1 et/ou de la composition de la solution aqueuse moussante A2 que par l'absence d'indicateur de détection.

13. Matériau selon la revendication 1, dans lequel les couches C1 et C2 sont séparées l'une de l'autre par au moins deux couches C3' et C3", la couche C3' étant au contact de la couche C1 et la couche C3" étant au contact de la couche C2, la couche C3' résultant de la congélation puis sublimation d'une mousse formée par une dispersion de bulles gazeuses dans une solution aqueuse moussante A3' et la couche C3" résultant de la congélation puis sublimation d'une mousse formée par une dispersion de bulles gazeuses dans une solution aqueuse moussante A3", chacune des solutions aqueuses moussantes A3' et A3" comprenant au moins un agent tensioactif, éventuellement au moins agent gélifiant et/ou des particules solides en un (co)polymère, mais étant exemptes d'indicateur de détection.

14. Matériau selon la revendication 13, dans lequel la composition de la solution aqueuse moussante A3' ne diffère de la composition de la solution aqueuse moussante A1 que par l'absence d'indicateur de détection tandis que la composition de la solution aqueuse moussante A3" ne diffère de la composition de la solution aqueuse moussante A2 que par l'absence d'indicateur de détection.

15. Procédé de préparation du matériau selon la revendication 1, comprenant au moins les étapes suivantes :
a) préparation des mousses ;
b) formation de l'empilement des couches C1 et C2 par :
i) dépôts successifs sur un substrat des mousses obtenues à l'issue de l'étape a) ;
ii) congélation des mousses, la congélation étant réalisée entre le dépôt des mousses et/ou après les dépôts successifs des mousses ;
c) sublimation de l'empilement obtenu à l'issue de l'étape b) ; et
d) retrait éventuel du substrat ;
moyennant quoi le matériau est obtenu.

16. Procédé selon la revendication 15, dans lequel la congélation est réalisée à une température comprise entre - 200 °C et - 10 °C et, de préférence, entre - 20 °C et - 15 °C.

17. Utilisation du matériau selon l'une quelconque des revendications 1 à 14 pour détecter la présence d'au moins un composé chimique dans un milieu.

18. Utilisation selon la revendication 17, dans laquelle le ou les composés chimiques sont des composés toxiques de guerre et/ou des composés toxiques industriels chimiques.
